# EUROPÄISCHE PATENTSCHRIFT

(11) **EP 0 932 774 B1**
(45) Veröffentlichungstag und Bekanntmachung des Hinweises auf die Patenterteilung: **07.08.2002**
(21) Anmeldenummer: 97945847.8
(22) Anmeldetag: 16.10.1997
(51) Int. Cl.: F16D 65/16

(54) **SCHEIBENBREMSSATTEL**
DISC BRAKE CALIPER
ETRIER DE FREIN A DISQUE

(30) Priorität: 26.10.1996 DE 19644552
(43) Veröffentlichungstag der Anmeldung: 04.08.1999
(73) Patentinhaber: Continental Teves AG & Co. oHG, 60488 Frankfurt (DE)
(72) Erfinder: WEIDENWEBER, Michael, D-60598 Frankfurt (DE); RÜCKERT, Helmut, D-64354 Reinheim (DE)
(74) Vertreter: Portwich, Peter
(86) Internationale Anmeldenummer: EP9705707
(87) Internationale Veröffentlichungsnummer: WO9819075

(56) Entgegenhaltungen:
- FR-A- 2 186 100
- GB-A- 2 129 878
- US-A- 4 387 901
- US-A- 5 325 940
- PATENT ABSTRACTS OF JAPAN vol. 096, no. 003, 29.März 1996 & JP 07 301264 A (TOYOTA MOTOR), 14.November 1995,

## Beschreibung

Die Erfindung betrifft einen Scheibenbremssattel gemäß dem Oberbegriff des Patentanspruchs 1.

Ein gattungsgemäßer Scheibenbremssattel ist aus der DE 42 02 927 A1 bekannt. Der bekannte Scheibenbremssattel besitzt eine hydraulische Betätigungsvorrichtung, die aus einem offenen Bremszylinder und einem im Bremszylinder axial verschiebbar angeordneten Bremskolben besteht. Bremskolben und Bremszylinder sind gegeneinander mittels eines Dichtrings abgedichtet, der in einer umlaufenden Ringnut im Inneren des Bremszylinders angeordnet ist und zur Abdichtung an einer äußeren Mantelfläche des Bremskolbens reibend anliegt. Der Dichtring hat nicht nur die Aufgabe, den Innenraum des Bremszylinders abzudichten, sondern er trägt aufgrund seiner elastischen Eigenschaften auch dazu bei nach der Bremsbetätigung ein Lüftspiel zwischen den Reibflächen der Bremsklötze und der Bremsscheibe einzustellen.

Bei einer Bremsbetätigung wird der Bremskolben mit hydraulischem Druck beaufschlagt und bewegt sich demzufolge in axialer Richtung aus dem Bremszylinder heraus. Der an der äußeren Mantelfläche des Bremskolbens anliegende Dichtring wird bei einer Axialverschiebung des Bremskolbens aufgrund der Reibung (in erster Linie Haftreibung) zwischen dem Dichtring und dem Bremskolben elastisch verformt. Bei Beendigung der Bremsbetätigung, d.h. bei Druckentlastung des hydraulischen Bremssystems, kehrt der elastische Dichtring wieder zu seiner ursprünglichen Form zurück und schiebt dabei den Bremskolben um ein geringes Maß in den Bremszylinder hinein. Ein am Bremskolben anliegender Bremsklotz folgt der Axialverschiebung des Bremskolbens, wobei seine Reibfläche von der Bremsscheibe abgehoben und somit ein Lüftspielel zwischen Bremsklotz und Bremsscheibe eingestellt wird.

Das Maß des eingestellten Lüftspiels ist im allgemeinen von der Beschaffenheit des Dichtringes und der den Dichtring aufnehmenden Ringnut, insbesondere von deren Querschnittsform, abhängig. Eine weitere unerwünschte Abhängigkeit besteht von dem während der Bremsbetätigung im Bremszylinder herrschenden hydraulischen Druck. Je höher der hydraulische Druck ist, desto größer ist auch die Verformung des Dichtringes. Im allgemeinen ist man bestrebt, nach jeder Bremsbetätigung unabhängig von dem dabei auftretenden hydraulischen Druck stets ein gleichbleibendes konstantes Lüftspiel zu erhalten. Zur Erreichung dieses Ziels wurden bereits eine Vielzahl von verschiedenen Querschnittsformen für die Ringnut vorgeschlagen, jedoch wurde für keine der Querschnittsformen ein gleichbleibend konstantes Lüftspiel unabhängig vom hydraulischen Druck erreicht.

Bei dem aus der DE 42 02 927 A1 bekannten Scheibenbremssattel ist beispielsweise ein von aneinandergrenzenden umlaufenden konischen Flächen bzw. Torusflächen begrenzter Übergangsbereich zwischen Ringnutwand und Zylinderfläche vorgesehen. In diesen Übergangsbereich wird der Dichtring bei Bremsbetätigung zumindest anteilig hineingedrückt. Ein druckunabhängiges Lüftspiel kann aber auch durch diese Ausführungsform nicht gewährleistet werden. Weiterhin kann es insbesondere bei hohem hydraulischen Druck zu Schädigungen am Dichtring kommen, der in diesem Fall weit in den spitz zulaufenden Übergangsbereich hineinverformt wird. Dadurch wird die Lebensdauer eines derartigen Dichtringes entscheidend herabgesetzt.

Die Aufgabe der Erfindung besteht darin, einen gattungsgemäßen Scheibenbremssattel hinsichtlich seines Lüftspieles zu verbessern, wobei insbesondere ein gleichbleibend konstantes Lüftspiel unabhängig vom aufgebrachten hydraulischen Druck angestrebt wird.

Gelöst wird die Aufgabe durch die Merkmalskombination des Patentanspruchs 1. Es ist dabei vorgesehen, im Übergangsbereich zwischen Bremszylinderfläche und im wesentlichen senkrecht zur Bremskolbenachse orientierte Nutwand der Ringnut eine umlaufende Ausnehmung anzuordnen, die im Querschnitt von einer Konturlinie begrenzt wird, die von der Nutwand ausgehend mit konvexer Wölbung beginnend in eine konkave Wölbung übergeht. Dadurch wird abhängig vom anstehenden hydraulischen Druck eine entsprechende elastische Verformung des Dichtringes in die umlaufende Ausnehmung hinein gestattet. Dabei ist die umlaufende Ausnehmung in erster Linie an derjenigen Nutwand der Ringnut angeordnet, die dem offenen Ende des Bremszylinders am nächsten liegt.

Zur Herabsetzung der Materialschädigungen am elastischen Dichtring gehen in einer bevorzugten Ausführungsform des Scheibenbremssattels die abschnittsweise unterschiedlichen Krümmungsradien der Konturlinie des Ausnehmungsquerschnitts kontinuierlich ineinander über. Eine Fertigungsvereinfachung in der Herstellung der Ausnehmung kann dadurch erreicht werden, daß die Ausnehmung zumindest abschnittsweise von umlaufenden konischen Teilflächen begrenzt wird.

In einer Weiterentwicklung des Ausnehmungsquerschnittes schließt die Konturlinie mit der Bremszylinderfläche einen vorzugsweise rechten Winkel ein. Dadurch können insbesondere bei hohem hydraulischen Druck Verschleißerscheinungen am Dichtring reduziert werden.

Eine weitere vorteilhafte Variante des Ausnehmungsquerschnittes ergibt sich bei Ausbildung einer radialen Erhebung in der Konturlinie, wodurch der für die elastische Dichtringverformung zur Verfügung stehende freie Raum eine Einschnürung erfährt. Somit wird eine übermäßige Verformung des Dichtringes bei mittlerem hydraulischen Druck in die Ausnehmung hinein vermieden.

Ausführungsbeispiele der Erfindung werden nachfolgend anhand der Zeichnung in sieben Figuren näher erläutert.

Es zeigen:
- Fig. 1: eine geschnittene Prinzipskizze eines erfindungsgemäßen Scheibenbremssattels,
- Fig. 2: ein vergrößertes Detail A aus Figur 1,
- Fig. 3: eine vergrößerte Darstellung einer Ringnut mit Ausnehmung im Querschnitt,
- Fig. 4 - 7: vergrößerete Darstellungen unterschiedlicher Ausführungsformen der Ausnehmung an der Ringnut im Querschnitt.

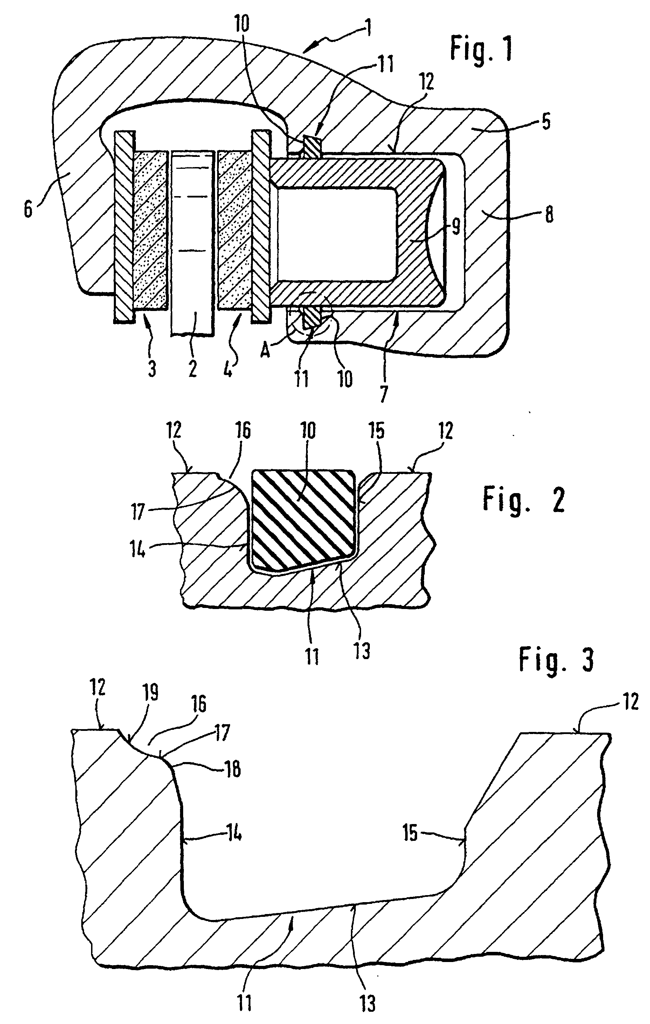

Der in Fig. 1 dargestellte Scheibenbremssattel 1 übergreift den äußeren Rand einer Bremsscheibe 2 sowie beiderseits der Bremsscheibe 2 angeordnete Bremsklötze 3,4. Der Scheibenbremssattel 1 weist einen axial innenliegenden Schenkel 5 und einen axial außenliegenden Schenkel 6 auf, an dem der axial äußere Bremsklotz 3 direkt anliegt. Der innenliegende Sattelschenkel 5 besitzt eine hydraulische Betätigungseinrichtung 7, die aus einem Bremszylinder 8 und einem Bremskolben 9 besteht. Dabei ist der Bremskolben 9 axial verschiebbar im Bremszylinder 8 angeordnet. Mit seiner aus dem offenen Bremszylinder 8 herausragenden Ende liegt der Bremskolben 9 am axial inneren Bremsklotz 4 an. Der Bremskolben 9 ist gegenüber dem Bremszylinder 8 mittels eines elastischen Dichtringes 10 abgedichtet. Der Dichtring 10 ist in einer im Inneren des Bremszylinders 8 umlaufenden Ringnut 11 untergebracht, die in die Zylinderfläche 12 des Bremszylinders 8 eingestochen ist. Die Ringnut 11 besteht im wesentlichen aus einem Nutboden 13, der schräg zur Zylinderfläche 12 verläuft und zwei Nutwänden 14,15, die im wesentlichen senkrecht zur Bremszylinderachse orientiert sind. Dabei hat der Dichtring 10 neben der hydraulischen Abdichtung auch die Funktion, nach der Beendigung der Bremsbetätigung und damit dem Abbau des hydraulischen Druckes den Bremskolben 9 nebst damit verbundenem Bremsklotz 4 möglichst in seine Ausgangsposition zurückzuziehen und damit in Lüftspiel zwischen Bremsklotz 4 und Bremsscheibe 2 einzustellen. Dazu verfügt die Ringnut 11 in ihrem Übergangsbereich zwischen Zylinderfläche 12 und Nutwand 14 über eine umlaufende Ausnehmung 16. Bei einer Bremsbetätigung wird der reibend am Bremskolben 9 anliegende Dichtring 10 vom axial sich verschiebenden Bremskolben 9 mitgenommen und damit in die Ausnehmung 16 elastisch hineinverformt.

Fig. 3 zeigt in vergrößerter Darstellung einen Querschnitt der Ringnut 11 mit angrenzender Ausnehmung 16. Dabei ist zu erkennen, daß die den Ausnehmungsquerschnitt begrenzende Konturlinie 17 von der Nutwand 14 ausgehend mit einem konvex gewölbten Abschnitt 18 beginnend in einen konkav gewölbten Abschnitt 19 übergeht. Dabei ist die umlaufende Ausnehmung 16 an derjenigen Nutwand 14 der Ringnut 11 angeordnet, die dem offenen Ende des Bremszylinders 8 am nächsten liegt. Bei Bremsbetätigung unter geringem hydraulischen Druck wird der Dichtring 10 aufgrund der konvexen Wölbung 18 nur zu geringen Anteilen in die Ausnehmung 16 elastisch hineinverformt. Gleichzeitig verfügt die Ausnehmung 16 jedoch noch über ausreichend Raum im Bereich des konkav gewölbten Abschnittes 19 der Konturlinie 17, der für die elastische Verformung des Dichtringes 10 bei hohem hydraulischen Druck bereitgestellt ist. Es ergibt sich damit die Möglichkeit, ein gleichbleibend konstantes Lüftspiel annähernd druckunabhängig einzustellen.

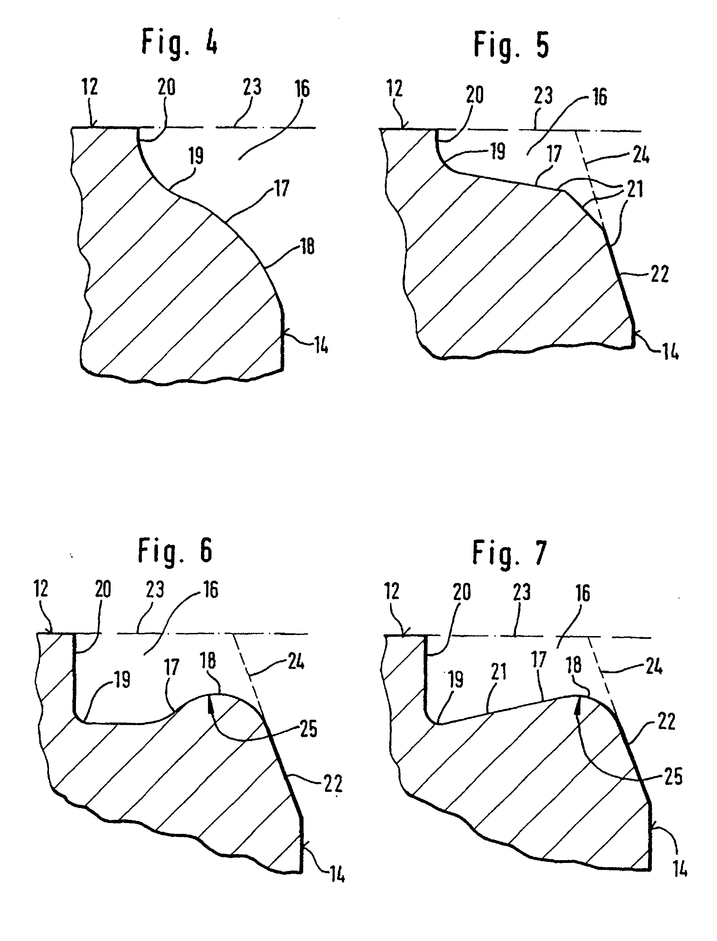

Die Fig. 4 bis 7 zeigen in vergrößerter Darstellung unterschiedliche Ausführungsbeispiele von umlaufenden Ausnehmungen 16 an der Ringnut 11, die sich hinsichtlich des Verlaufes der den Ausnehmungsquerschnitt begrenzenden Konturlinie 17 unterscheiden. In Fig. 4 ist ein annähernd S-förmiger Verlauf der Konturlinie 17 erkennbar, der sich ergibt, wenn die Konturlinie 17 von der Nutwand 14 ausgehend von einem konvex gewölbten Abschnitt 18 in einem konkav gewölbten Abschnitt 19 übergeht. Die abschnittsweise unterschiedlichen Krümmungsradien der Konturlinie 17 weisen tangentiale Übergänge auf, wodurch der Materialverschleiß am Dichtring 11 reduziert wird. Bei Bremsbetätigung unter niedrigem hydraulischen Druck verformt sich der Dichtring 11 lediglich teilweise in die Ausnehmung 16, etwa in den Bereich, der vom konvex gewölbten Abschnitt 18 begrenzt wird. Erst bei sehr hohem hydraulischen Druck in der Bremsanlage verformt sich der elastische Dichtring 11 bei Bremsbetätigung in den gesamten Querschnitt der Ausnehmung 16 hinein, bis seine elastische Verformung durch Anlage an einer Anschlagfläche 20 zum Erliegen kommt. Die Anschlagfläche 20, die vorzugsweise bei allen Ausführungsformen der Ausnehmung 16 im unmittelbaren Übergangsbereich zum Bremszylinder einen bevorzugt rechten Winkel zur Zylinderfläche 12 einschließt, begrenzt letztendlich die elastische Verformung des Dichtringes 11 in axialer Richtung. Dadurch wird vornehmlich ein übermäßiger Materialverschleiß am Dichtring 11 verhindert. Bei hydraulischem Druckabbau in der Bremsanlage verformt sich der Dichtrng 11, bei Auswahl eines Materials mit geeigneten elastischen Eigenschaften, axial in seine Ausgangslage zurück und nimmt den Bremskolben 9 durch reibende Anlage an seiner Mantelfläche mit. Diese allgemeine Funktionsweise läßt sich auch auf die anders ausgeführten Varianten nach den Fig. 5 bis 7 übertragen.

In Fig. 5 ist aus Gründen der Fertigungsvereinfachung der Bereich der Konturlinie 17, der an die Nutwand 14 der Ringnut 11 angrenzt, mit geraden Abschnitten 21 versehen. Die Zusammensetzung der Konturlinie 17 zumindest teilweise aus Abschnitten einfacher geometrischer Linienführung, wie beispielsweise einer Geraden, gestattet somit eine günstige Herstellung der Ausnehmung mittels einer spanenden Bearbeitung. Insbesondere dem unmittelbar an die Nutwand 14 angrenzenden geraden Abschnitt 21, der unter einem geringen Winkel zur Nutwand an diese anschließt, kommt die besondere Funktion zu, bei geringem Druck in der Bremsanlage eine Anlagefläche 22 für den Dichtring 10 zu bilden. In einem solchen Betriebsfall kommt der Dichtring 10 unter elastischer Verformung in Berührung mit der Anlagefläche 22 und erstreckt sich weiterhin im Zwischenraum bis zum Kontakt mit der Bremskolbenmantelfläche 23 (siehe strichpunktierte Linie in den Figuren 4 bis 7) nur in geringem Maße in die Ausnehmung 16 hinein, wie die Dichtringkontur 24 in den Fig. 5 bis 7 verdeutlicht. Erst bei deutlich höherem hydraulischen Druck wird die Ausnehmung 16 in größerem Maße vom elastisch verformten Dichtring 10 ausgefüllt. Dadurch ergibt sich die Möglichkeit der Einstellung eines gleichbleibend konstanten Lüftspieles über einen sehr großen Druckbereich.

Die in den Fig. 6 bis 7 gezeigten Varianten verdeutlichen einen weiteren Ansatz zur Realisierung der druckunabhängigen Lüftspielkonstanz. Die den Ausnehmungsquerschnitt 16 begrenzende Konturlinie 17 besitzt in den Fig. 6 und 7 auf ihrer der Ringnut 11 zugewandten rechten Seite eine radiale Erhebung 25. Durch diese radiale Erhebung 25 wird der freie Abstand zwischen Konturlinie 17 und Bremskolbenmantelfläche 23 eingeschnürt. Damit ergibt sich insbesondere bei Bremsbetätigung unter mittlerem hydraulischem Druck ein Hindernis für den sich in die Ausnehmung 16 elastisch hineinverformenden Dichtring 10. Erst bei weiterem Druckanstieg ist der Dichtring 10 in der Lage, die Einschnürung zwischen Konturlinie 17 und Bremskolbenmantelfläche 23 zu überwinden und den axial hinter der Einschnürung liegenden linken Bereich der Ausnehmung 16 (siehe Fig. 6 und 7) auszufüllen. Die gleichbleibende Lüftspielkonstanz läßt sich durch diese Maßnahme über einen größeren hydraulischen Druckbereich einstellen.

Eine zusätzliche Fertigungsvereinfachung ergibt sich auch für die Varianten nach den Fig. 6 und 7 durch Zusammensetzung der Konturlinie 17 zumindest teilweise aus geraden Abschnitten 21. Insbesondere in Fig. 7 ist dies im Verbindungsabschnitt zwischen dem konvex gewölbten Abschnitt 18 und dem konkav gewölbten Abschnitt 19 erkennbar.

## Patentansprüche

1. Scheibenbremssattel mit zumindest einer aus einem offenen Bremszylinder (8) und einem darin axial beweglich angeordneten Bremskolben (9) bestehenden hydraulischen Betätigungseinrichtung (7), die über einen elastischen Dichtring (10) verfügt, der in einer umlaufenden Ringnut (11) im Inneren des offenen Bremszylinders (8) angeordnet ist und zur Abdichtung einer äußeren Mantelfläche (23) des Bremskolbens (9) reibend anliegend, wobei zumindest eine der zur Bremskolbenachse im wesentlichen senkrechten Nutwände (14,15) der Ringnut (11) im Übergangsbereich zwischen Zylinderfläche (12) des Bremszylinders (8) und Nutwand (14) der Ringnut (11) eine umlaufende Ausnehmung (16) aufweist, in die der Dichtring (10) von dem bei Bremsbetätigung axial bewegten Bremskolben (9) elastisch hineingedrückt wird, **dadurch gekennzeichnet, daß** die umlaufende Ausnehmung (16) im Querschnitt von einer Konturlinie (17) begrenzt wird, die ausgehend von der an die Ausnehmung (16) angrenzenden Nutwand (14) der Ringnut (11) von einer konvexen Wölbung (18) in eine konkave Wölbung (19) übergeht, wobei Abschnitte der Konturlinie (17) des Ausnehmungsquerschnittes (16) mit unterschiedlichen Krümmungsradien tangential ineinander übergehen.

2. Scheibenbremssattel (1) nach Anspruch 1, **dadurch gekennzeichnet, daß** die umlaufende Ausnehmung (16) an derjenigen Nutwand (14) der Ringnut (11) angeordnet ist, die dem offenen Ende des Bremszylinders (8) am nächsten liegt.

3. Scheibenbremssattel nach einem der vorhergehenden Ansprüche, **dadurch gekennzeichnet, daß** die Konturlinie (17) zumindest teilweise gerade Abschnitte (21) besitzt.

4. Scheibenbremssattel nach einem der vorhergehenden Ansprüche, **dadurch gekennzeichnet, daß** die in die Zylinderfläche (12) des Bremszylinders (8) auslaufende Ausnehmung (16) zwischen ihrer Konturlinie (17) und der Zylinderfläche (12) einen rechten Winkel einschließt.

5. Scheibenbremssattel (1) nach einem der vorhergehenden Ansprüche, **dadurch gekennzeichnet, daß** die den Ausnehmungsquerschnitt (16) begrenzende Konturlinie (17) eine radiale Erhebung (25) aufweist, wodurch der freie Abstand zwischen Konturlinie (17) und Bremskolbenmantelfläche (23) eingeschnürt wird.

## Claims

1. Disc brake caliper with at least one hydraulic actuating device (7) comprised of an open brake cylinder (8) and a brake piston (9) which is axially movably arranged therein, the actuating device having an elastic sealing ring (10) mounted in a circumferential annular groove (11) in the inside of the open brake cylinder (8) and being in frictional abutment for sealing an external peripheral surface (23) of the brake piston (9), wherein at least one of the groove walls (14, 15) of the annular groove (11), which walls are substantially vertical to the brake piston axis, includes a circumferential recess (16) in the area of transition between the cylinder surface (12) of the brake cylinder (8) and the groove wall (14) of the annular groove (11), into which recess (16) the sealing ring (10) is urged elastically by the brake piston (9) which is moved in an axial direction when the brake is applied,
**characterized in that** the circumferential recess (16) in its cross-section is defined by a contour line (17) which, starting from the groove wall (14) of the annular groove (11) adjacent to the recess (16), passes from a convex curvature (18) over into a concave curvature (19), and sections of the contour line (17) of the cross-section of recess (16) that have different radii of curvature pass into one another tangentially.

2. Disc brake caliper (1) as claimed in claim 1,
**characterized in that** the circumferential recess (16) is arranged at that groove wall (14) of the annular groove (11) which is closest to the open end of the brake cylinder (8).

3. Disc brake caliper as claimed in any one of the preceding claims,
**characterized in that** the contour line (17), at least in part, has straight portions (21).

4. Disc brake caliper as claimed in any one of the preceding claims,
**characterized in that** the recess (16) ending into the cylinder surface (12) of the brake cylinder (8) forms a right angle between its contour line (17) and the cylinder surface (12).

5. Disc brake caliper (1) as claimed in any one of the preceding claims,
**characterized in that** the contour line (17) which defines the cross-section of the recess (16) includes a radial elevation (25) so that the free space between the contour line (17) and the peripheral surface (23) of the brake piston is contracted.

## Revendications

1. Etrier de frein à disque avec au moins un dispositif d'actionnement hydraulique (7) comprenant un cylindre de frein (8) ouvert et un piston de frein (9) disposé à déplacement axial à l'intérieur de ce dernier, ce dispositif présentant un joint d'étanchéité élastique (10) qui est disposé dans une rainure annulaire (11) circulaire à l'intérieur du cylindre de frein (8) ouvert et qui s'applique pour l'étanchéification de manière frottante contre une surface d'enveloppe (23) extérieure du piston de frein (9), au moins l'une des parois de rainure (14, 15) de la rainure annulaire (11) s'étendant pour l'essentiel verticalement par rapport à l'axe du piston de frein présentant, dans la zone de transition entre la surface de cylindre (12) du cylindre de frein (8) et la paroi de rainure (14) de la rainure annulaire (11), un évidement circulaire (16) dans lequel le joint d'étanchéité (10) est élastiquement poussé par le piston de frein (9) se déplaçant dans le sens axial lors d'un actionnement du frein, **caractérisé en ce que** la section transversale de l'évidement circulaire (16) est délimitée par une ligne de contour (17) qui à partir de la paroi de rainure (14) de la rainure annulaire (11) adjacente à l'évidement (16) passe depuis une courbure convexe (18) dans une courbure concave (19), des sections de la ligne de contour (17) de la section transversale de l'évidement (16) présentant des rayons de courbure différents passant tangentiellement l'une dans l'autre.

2. Etrier de frein à disque (1) selon la revendication 1, **caractérisé en ce que** l'évidement circulaire (16) est disposé sur celle des parois de rainure (14) de la rainure annulaire (11) qui est la plus proche de l'extrémité ouverte du cylindre de frein (8).

3. Etrier de frein à disque selon l'une des revendications précédentes, **caractérisé en ce que** la ligne de contour (17) présente du moins partiellement des sections droites (21).

4. Etrier de frein à disque selon l'une des revendications précédentes, **caractérisé en ce que** l'évidement (16) débouchant dans la surface de cylindre (12) du cylindre de frein (8) enferme un angle droit entre sa ligne de contour (17) et la surface de cylindre (12).

5. Etrier de frein à disque (1) selon l'une des revendications précédentes, **caractérisé en ce que** la ligne de contour (17) délimitant la section transversale de l'évidement (16) présente un bossage radial (25) rétrécissant la distance libre entre la ligne de contour (17) et la surface d'enveloppe du piston de frein (23).
